Europäisches Patentamt

European Patent Office

Office européen des brevets

(19)

(11) Numéro de publication : **0 453 367 B1**

(12)

# FASCICULE DE BREVET EUROPEEN

(45) Date de publication du fascicule du brevet :
26.01.94 Bulletin 94/04

(51) Int. Cl.⁵ : **B01J 27/04, C10G 45/04**

(21) Numéro de dépôt : **91401027.7**

(22) Date de dépôt : **18.04.91**

(54) **Catalyseur d'hydroraffinage de charges hydrocarbonées à base de trisulfure de niobium et procédé d'hydroraffinage utilisant ledit catalyseur.**

(30) Priorité : **20.04.90 FR 9005048**

(43) Date de publication de la demande :
**23.10.91 Bulletin 91/43**

(45) Mention de la délivrance du brevet :
**26.01.94 Bulletin 94/04**

(84) Etats contractants désignés :
**BE DE ES GB IT NL**

(56) Documents cités :
**FR-A- 2 588 879**
**US-A- 4 368 115**
**US-A- 4 777 157**
**RUSSIAN JOURNAL OF INORGANIC CHEMIS-
TRY, vol. 32, no. 7, 1987, pages 951-953, Londres, GB; A.V. MISCHENKO et al.: "The
preparation and properties of lithium intercalates based on niobium trichalcogenides"**

(73) Titulaire : **ELF FRANCE
Tour Elf 2, Place de la Coupole
LA DEFENSE 6 - 92400 Courbevoie (FR)**

(72) Inventeur : **Breysse, Michèle
15, rue Pierre Bourgeois
F-69300 Caluire (FR)**
Inventeur : **des Courieres, Thierry
12, bld. Yves Farge
F-69007 Lyon (FR)**
Inventeur : **Danot, Michel
35, rue de Tackrouna
F-44300 Nantes (FR)**
Inventeur : **Geantet, Christophe
1, allée Athéna
F-69100 Villeurbanne (FR)**
Inventeur : **Portefaix, Jean-Louis
401, avenue du 8 Mai 1945
F-69300 Caluire (FR)**

(74) Mandataire : **Boillot, Marc et al
SOCIETE NATIONALE ELF AQUITAINE
Division Propriété Industrielle Tour Elf
F-92078 Paris la Défense Cédex 45 (FR)**

## Description

Cette invention concerne un catalyseur d'hydroraffinage de charges hydrocarbonées et un procédé d'hydroraffinage qui met en oeuvre ledit catalyseur.

Le pétrole et les fractions pétrolières sont des mélanges très complexes, où à côté des hydrocarbures, se trouvent des composés renfermant des hétéroatomes, comme le soufre, l'azote et l'oxygène. Ce sont généralement des impuretés nuisibles à la bonne qualité des produits pétroliers. Ils sont notamment responsables des problèmes liés à la pollution, à la corrosion, à l'odeur et à la stabilité. Il est donc important de les éliminer au cours du raffinage. Il s'agit en général d'un traitement à l'hydrogène, en présence d'un catalyseur qui favorise la rupture des liaisons carbone-héréroatomes. Ce traitement est appelé hydroraffinage.

Un effort de recherche considérable a été déployé pour trouver des catalyseurs d'hydroraffinage efficaces. Les catalyseurs les plus couramment utilisés sont à base de nickel, de molybdène, de tungstène ou de cobalt.

Le reste est préparé par imprégnation d'alumine, en général d'alumine gamma, par une solution aqueuse de sels métalliques. Après imprégnation le support est séché puis calciné.

La conversion des oxydes métalliques formés, en sulfures, se déroule en présence de composés soufrés, comme l'hydrogène sulfuré, le disulfure de carbone, le soufre élémentaire, les mercaptans ou thioethers. En général, cette sulfuration se déroule en présence d'hydrogène.

Le sulfure de niobium a suscité jusqu'ici peu d'intérêt comme catalyseur d'hydroraffinage. PECORADO et CHIANELLI (J.Catal 67 430 (1981)) ont montré que le sulfure de niobium massique avait une activité faible pour l'hydrodésulfuration du dibenzothiophène. De manière similaire, le sulfure de niobium supporté par le carbone est très peu actif en hydrodésulfuration (VISSERS Bull. Soc. Chim. Belg. 93 813 (1984)) et en hydrodésazotation.

Le brevet américain US-A-4777157 décrit un catalyseur supporté contenant un composé de niobium, par exemple du sulfure de niobium $NbS_2$, utilisé dans l'hydrocraquage d'hydrocarbures.

Le brevet américain US-A-4368115 concerne un procédé d'hydrodesulfuration par des chalcogénures de métaux de transition. L'utilisation de disulfure de niobium est envisagée. Un catalyseur constitué par du trisulfure de niobium n'est nullement divulgué par ces documents.

Dans toutes les études, il s'agit de disulfure de niobium, qui est le dérivé soufré du niobium le plus stable et le plus facile à synthétiser.

Nous avons trouvé maintenant qu'un autre sulfure de niobium, le trisulfure, difficile à synthétiser et instable en atmosphère peu riche en soufre présente des propriétés catalytiques remarquables.

Cette invention concerne donc un catalyseur d'hydroraffinage de charges hydrocarbonées caractérisé en ce qu'il consiste en trisulfure de niobium soit sous forme massique soit déposé sur un support inerte.

Le trisulfure de niobium massique est préparé par chauffage sous pression autogène et en absence d'air, de niobium et de soufre en rapport stoechiométrique. Cette réaction est effectuée normalement à une température de 650 à 750°C.

Nous avons trouvé qu'en abaissant la température de la réaction, non seulement les pertes de soufre sont évitées mais il y a également augmentation de l'aire spécifique du trisulfure de niobium formé. Le trisulfure est donc préparé à une température comprise entre 450 et 750°C, mais de préférence comprise entre 450 et 550°C. En effet, en travaillant à une température voisine de 500°C, l'aire spécifique du trisulfure de niobium obtenu est d'environ $2,5m^2/g$. Même à cette température la réaction est totale, dans la mesure où le traitement est suffisamment long, de l'ordre d'une quinzaine de jours. Par contre il n'est pas possible de dépasser l'aire spécifique de $2,5m^2/g$ par cette méthode directe.

Nous avons trouvé un traitement qui permet d'augmenter l'aire spécifique du trisulfure de niobium. Ce traitement consiste à intercaler du lithium dans le réseau cristallin du trisulfure de niobium, puis à désintercaler ce lithium. Le trisulfure de niobium obtenu a une surface spécifique très supérieure à celle du produit de départ. Ainsi, en partant d'un trisulfure de niobium dont la surface spécifique est de $2,5m^2/g$, nous avons obtenu un trisulfure de $11,5m^2/g$ et un autre de $18m^2/g$ selon la quantité de lithium intercalé.

L'intercalation du lithium est réalisé par réaction du trisulfure avec un alkyllithium, en général le butyllithium dans un solvant inerte, comme l'hexane. (Mishchenko Zh. Neorg. Kim. 1987,32(7) 1591-5). Il est possible d'intercaler plusieurs atomes de lithium par motif de sulfure. La surface spécifique varie en fonction de la quantité de lithium intercalée. Cette quantité ne peut pas dépasser trois atomes de lithium par motif de trisulfure.

Le lithium est désintercalé par exemple avec une solution d'iode, dans un solvant comme l'acétonitrile.

Le trisulfure de niobium supporté est obtenu par imprégnation d'un support inerte par une solution aqueuse de sel de niobium. Nous avons trouvé de façon inattendue que l'activité catalytique du trisulfure de niobium est beaucoup plus élevée, si on choisit pour l'imprégnation l'oxalate de niobium plutôt que d'autres sels solubles, comme par exemple le niobate d'ammonium.

Il est avantageux d'effectuer cette imprégnation "à sec", c'est-à-dire de telle manière qu'il n'y ait pas de liquide surnageant le solide. Après séchage, ce solide imprégné est sulfuré par un mélange de $N_2$-$H_2S$.

La température de sulfuration est comprise entre 300 et 600°C, et de préférence entre 350 et 450°C. La durée de la sulfuration est d'environ 4 heures.

Il est important d'utiliser un support inerte, ne présentant pas d'interaction forte avec le niobium, car la liaison Nb-O est très forte et donc difficile à rompre. Une interaction forte avec le support empêche la sulfuration du niobium. Parmi les supports inertes nous pouvons mentionner le carbone et la silice.

Les propriétés catalytiques du trisulfure de niobium massique ou supporté ont été mesurées dans les réactions caractéristiques des procédés d'hydroraffinage, l'hydrodésulfuration et l'hydrodésazotation, c'est-à-dire des réactions entraînant la rupture de liaisons carbonesoufre et carbone-azote.

L'activité catalytique du trisulfure de niobium supporté dans l'hydrodésulfuration du thiophène est très supérieure à celle du sulfure de molybdène ayant la même teneur en métal. Par ailleurs, l'activité catalytique du trisulfure de niobium dans cette réaction est environ cinq fois plus élevée que celle du disulfure de niobium.

Plusieurs réactions d'hydrodésazotation ont été étudiées, comme la rupture de la liaison carbone-azote dans une amine aliphatique comme la n-pentylamine ou dans un hétérocycle comme la pipéridine.

L'activité catalytique du trisulfure de niobium est particulièrement remarquable pour les réactions de coupure des liaisons carbone-azote.

Dans la conversion de la n-pentylamine, le trisulfure de niobium présente une activité deux fois supérieure à celle du sulfure de rhodium et environ sept fois supérieure à celle du sulfure de molybdène, qui sont les sulfures les plus actifs parmi ceux étudiés. La raison de cette activité importante n'est pas encore totalement élucidée. Néanmoins, les études de mécanisme des réactions de conversion de la n-pentylamine et de la pipéridine montrent qu'il y a d'abord coordination de l'amine sur le métal de transition par le doublet de l'azote, suivie par une abstraction d'hydrogène en position béta de l'azote. Le trisulfure de niobium comportant des groupements $(S_2)^{2-}$ et $S^{2-}$ serait plus actif que les sulfures comportant uniquement des groupements $S^{2-}$, pour cette étape.

Le trisulfure de niobium est également très actif comme catalyseur d'hydrogénation et de craquage du biphényle. Le trisulfure présente une activité catalytique environ cinq fois plus grande que celle du disulfure.

La sélectivité du craquage du biphényle en cyclohexane et benzène est remarquable. Elle est de 90 % comparée à 20 % pour les catalyseurs habituels, tels que les sulfures de molybdène ou de tungstène.

Les exemples suivants illustrent l'invention sans toutefois la limiter.

## EXEMPLE 1

L'oxalate de niobium Nb(Nb $(HC_2O_4)_5$) de NIOBIUM PRODUCTS CO. INC. est dissous dans une solution tampon, solution aqueuse à 0,01M d'acide oxalique et d'oxalate d'ammonium. Un support inerte de grande surface, le carbone C-NORIT R X 3, de 1200m²/g est introduit dans cette solution de telle manière qu'il n'y ait pas de liquide surnageant le solide (imprégnation dite à sec). Après séchage, le solide est ensuite sulfuré par une mélange $N_2$-$H_2S$ durant quatre heures à 400°C. Le catalyseur obtenu contient 9 % poids de niobium.

## EXEMPLE 2 (comparatif)

Un catalyseur similaire, renfermant 9 % poids de niobium a été préparé par imprégnation avec une solution de niobate d'ammonium ($NH_4NbO_3$, $H_2O$).

## EXEMPLE 3

On introduit dans un réacteur 92,91g de niobium et 96g de soufre. Le mélange est chauffé sous pression autogène à 500°C. On obtient cette température en trois jours, et elle est maintenue pendant trois semaines. Le mélange est lentement refroidi à la température ambiante. La réaction est complète, le produit obtenu est homogène.

La mesure de diffraction aux rayons X par un diffractomètre SIEMENS D 500 est en accord avec la structure $NbS_3$. La surface spécifique déterminée par BET est de 2,5 m²/g.

## EXEMPLE 4

On introduit dans une fiole 0,75g de $NbS_3$ dont la surface spécifique est de 2, 5 m²/g, 25 ml d'hexane et 8 ml de butyllithium. La réaction se déroule durant 5 jours sous agitation. Le produit est ensuite filtré, rincé à l'hexane et séché. La structure du produit obtenu correspond à $Li_3 NbS_3$. Il est désintercalé par une solution

EP 0 453 367 B1

de iode dans l'acétronitrile selon l'équation =

$$Li_3 NbS_3 + 3/_2 I_2 \longrightarrow NbS_3 + 3 Li\text{-}I$$

La surface spécifique mesurée par BET après désintercalation et de 18 m²/g.

En utilisant 1,5 mole d'iode par mole de $NbS_3$ on obtient un produit dont la surface spécifique est de 11,5 m²/g.

EXEMPLE 5

Nous avons comparé les activités catalytiques en hydrodésulfuration du thiophène à 573K sous une pression totale de 1 atmosphère et une pression du réactif de 24 10² Pa des $NbS_3$ supportés préparés selon l'exemple 1 et l'exemple comparatif 2. Tous les catalyseurs renferment 9 % poids de niobium.

TABLEAU I

| Catalyseur | Activité $10^{-8}$ mol.$S^{-1}$ $g^{-1}$ |
|---|---|
| EXEMPLE 1 | 105 |
| EXEMPLE 2 (comparatif) | 18 |
| Sulfure de molybdène sur alumine commercial (9% Mo) | 32 |

EXEMPLE 6

Nous avons comparé la vitesse intrinsèque de la conversion de la pipéridine, mesurée par la vitesse de disparition du réactif. Nous avons opéré à 300°C, sous une pression partielle de 3 MPa d'hydrogène, une pression partielle de pipéridine de 0,026 MPa et une pression partielle d'$H_2S$ de 0,006 MPa. Les catalyseurs testés ont été $NbS_3$ selon l'exemple 4, Nb $S_2$ et d'autres sulfures métalliques

TABLEAU 2

| Catalyseur | Surface* ($m^2/g$) | Vitesse spécifique $10^{-9}$mol $s^{-1}$ $g^{-1}$ | Vitesse intrinsèque $10^{-9}$mol $s^{-1}m^{-2}$ |
|---|---|---|---|
| $NbS_3$(Ex.4) | 11,5 | 1070 | 93,0 |
| $NbS_2$ | 9 | 520 | 57,8 |
| $MoS_2$ | 29 | 1150 | 39,6 |
| $WS_2$ | 58 | 820 | 14,1 |
| $Co_9S_8$ | 12 | 110 | 9,2 |
| $Ni_3S_2$ | 12 | 28 | 2,3 |

*mesurée par la méthode BET sur le catalyseur sulfuré et avant test catalytique.

EXEMPLE 7

Nous avons comparé la vitesse intrinsèque de la conversion de la n-pentylamine, mesurée par la vitesse d'apparition des hydrocarbures en $C_5$. Nous avons opéré à 275°C sous une pression partielle d'hydrogène de 0,1 MPa, une pression partielle de n-pentylamine 0,133 KPa et une pression partielle d'$H_2S$ de 4 KPa. Les catalyseurs testés ont été $NbS_3$ selon l'exemple 4 $NbS_2$ et d'autres sulfures métalliques.

4

TABLEAU 3

| Catalyseur | Surface | Vitesse spécifique | Vitesse intrinsèque |
|---|---|---|---|
| | $(m^2/g)$ | $10^{-9} mol\ s^{-1}g^{-1}$ | $10^{-9}\ mol\ s^{-1}m^{-2}$ |
| $NbS_3(Ex.4)$ | 11,5 | 880 | 76,5 |
| $NbS_2$ | 9 | 92 | 10,2 |
| $MoS_2$ | 64 | 61 | 9,6 |
| $WS_2$ | 58 | 331 | 5,7 |
| $Co_9S_8$ | 40 | 93 | 2,3 |
| $Ni_3S_2$ | 6 | 22 | 3,7 |
| $Rh_2S_3$ | 89 | 960 | 10,8 |

Pour la même réaction nous avons comparé un catalyseur à 9 % de niobium selon l'exemple 1, un catalysseur à 9 % de molybdène sur alumine et un catalyseur commercial nickel-molybdène sur alumine (HR 346 de la société Procatalyse).

Nous avons déterminé la vitesse spécifique ainsi que la sélectivité en apparition des $C_5$ pour une conversion de 20 %.

TABLEAU 4

| Catalyseur | Vitesse spécifique $10^{-7}\ mol\ s^{-1}\ g^{-1}$ | Sélectivité en $C_5$ à 20 % conversion |
|---|---|---|
| Nb/C(Ex.1) | 8 | 60 |
| Mo/Al | 8 | 36 |
| HR 346 | 10 | 46 |

La sélectivité meilleure du trisulfure de niobium apparaît clairement.

EXEMPLE 8

Nous avons comparé la vitesse intrinsèque de la conversion du biphényle à 530K, une pression totale de 23 $10^5$ Pa, une pression du réactif de 8 $10^2$ Pa et une pression partielle d'$H_2S$ ajoutée de 4,3 $10^2$ Pa. Les catalyseurs testés sont $NbS_3$ selon l'exemple 4, $NbS_2$ et d'autres sulfures métalliques.

TABLEAU 5

| Catalyseur | Surface | Vitesse spécifique | Vitesse intrinsèque |
|---|---|---|---|
| | $(m^2/g)$ | $10^{-10}\ mol\ s^{-1}\ g^{-1}$ | $10^{-10}mol.s^{-1}\ m^{-2}$ |
| $NbS_3\ (Ex.4)$ | 11,5 | 480 | 41,8 |
| $NbS_2$ | 9 | 250 | 27,8 |
| $MoS_2$ | 51 | 510 | 11,2 |
| $WS_2$ | 63 | 760 | 12,1 |
| $Co_9S_8$ | 26 | 120 | 4,6 |
| $Ni_3S_2$ | 20 | 76 | 3,8 |

## Revendications

1. Catalyseur d'hydroraffinage de charges hydrocarbonées caractérisé en ce qu'il consiste en trisulfure de niobium soit sous forme massique soit déposé sur un support inerte.

2. Catalyseur selon la revendication 1 caractérisé en ce que le trisulfure de niobium est préparé par chauffage de niobium et de soufre sous pression autogène à une température comprise entre 450 et 750°C.

3. Catalyseur selon la revendication 2 caractérisé en ce que la dite température est comprise entre 450 et 550 °C.

4. Catalyseur selon l'une des revendications 1 à 3 caractérisé en ce que l'aire spécifique du trisulfure de niobium est augmentée par intercalation de lithium suivi d'une désintercalation.

5. Catalyseur selon la revendication 4 caractérisé en ce que le lithium est intercalé à l'aide d'un alkyllithium, comme le butyllithium et la désintercalation est effectuée par traitement avec de l'iode dans un solvant.

6. Catalyseur selon la revendication 1 caractérisé en ce que le support est du carbone ou de la silice.

7. Catalyseur selon la revendication 1 ou 6 caractérisé en ce qu'il est préparé par imprégnation d'un support inerte par une solution d'oxalate de niobium, séchage et sulfuration.

8. Procédé d'hydroraffinage catalytique caractérisé en ce qu'on utilise un catalyseur selon les revendications 1 à 7.

9. Procédé selon la revendication 8 caractérisé en ce que la réaction d'hydroraffinage est l'hydrodésulfuration.

10. Procédé selon la revendication 8 caractérisé en ce que la réaction d'hydroraffinage est l'hydrodésazotation.

## Patentansprüche

1. Katalysator für die Raffination von Kohlenwasserstofffraktionen, dadurch **gekennzeichnet**, daß dieser aus Niobtrisulfid in kompakter Form oder auf einen inerten Träger aufgebracht besteht.

2. Katalysator nach Anspruch 1, dadurch **gekennzeichnet,** daß das Niobtrisulfid hergestellt wird durch Erwärmung von Niob und Schwefel unter Eigendruck bei einer Temperatur zwischen 450 und 750°C.

3. Katalysator nach Anspruch 2, dadurch **gekennzeichnet,** daß die Temperatur zwischen 450 und 550°C liegt.

4. Katalysator nach einem der Ansprüche 1 bis 3, dadurch **gekennzeichnet**, daß die spezifische Oberfläche des Niobtrisulfids durch Einbau von Lithium unter nachfolgender Entfernung des Lithiums erhöht wird.

5. Katalysator nach Anspruch 4, dadurch **gekennzeichnet,** daß das Lithium mit Hilfe eines Alkyllithiums, wie z.B. Butyllithium, eingebaut wird und die nachfolgende Entfernung des Lithiums durch Behandlung mit Jod in einem Lösungsmittel erfolgt.

6. Katalysator nach Anspruch 1, dadurch **gekennzeichnet**, daß der Träger aus Kohlenstoff oder Siliziumdioxid besteht.

7. Katalysator nach Anspruch 1 oder 6, dadurch **gekennzeichnet**, daß er hergestellt ist durch Tränkung eines inerten Trägers mit einer Nioboxalatlösung, Trocknung und Schwefelung.

8. Verfahren zur katalytischen Raffination von Kohlenwasserstofffraktionen, dadurch **gekennzeichnet,** daß man einen Katalysator nach Anspruch 1 bis 7 verwendet.

9. Verfahren nach Anspruch 8, dadurch **gekennzeichnet,** daß die Reaktion der Raffination von Kohlenwasserstofffraktionen die hydrierende Entschwefelung ist.

10. Verfahren nach Anspruch 8, dadurch **gekennzeichnet**, daß die Reaktion der Raffination von Kohlenwasserstofffraktionen die hydrierende Entfernung von Stickstoff ist.

**Claims**

1. Catalyst for the hydrorefining of hydrocarbon feedstock characterized in that it consists of niobium trisulphide either in solid form or deposited on an inert support.

2. Catalyst according to Claim 1, characterized in that the niobium trisulphide is prepared by the heating of niobium and sulphur under autogenous pressure to a temperature of between 450 and 750°C.

3. Catalyst according to Claim 2, characterized in that the said temperature is between 450 and 550°C.

4. Catalyst according to any one of Claims 1 to 3, characterized in that the specific surface of the niobium trisulphide is increased by the intercalation of lithium, followed by de-intercalation.

5. Catalyst according to Claim 4, characterized in that the lithium is intercalated by means of an alkyl lithium such as butyl lithium and the de-intercalation is effected by treatment with iodine in a solvent.

6. Catalyst according to Claim 1, characterized in that the support is carbon or silica.

7. Catalyst according to Claim 1 or Claim 6, characterized that it is prepared by the impregnation of an inert support with a solution of niobium oxalate, drying and sulphurization.

8. Catalytic hydrorefining method, characterized in that a catalyst according to Claims 1 to 7 is used.

9. Method according to Claim 8, characterized in that the hydrorefining reaction is hydrodesulphurization.

10. Method according to Claim 8, characterized in that the hydrorefining reaction is hydrodenitrification.